# EUROPÄISCHE PATENTSCHRIFT

(11) **EP 2 113 415 B1**
(45) Veröffentlichungstag und Bekanntmachung des Hinweises auf die Patenterteilung: **18.08.2010**
(21) Anmeldenummer: 09003248.3
(22) Anmeldetag: 06.03.2009
(51) Int. Cl.: B60P 1/64

(54) **Fahrgestell für Container, Aufbauten und dergleichen Ladungsbehälter**
Chassis for containers, structures and similar load containers
Châssis pour un conteneur, des montages et des supports de charge analogues

(30) Priorität: 30.04.2008 DE 102008024058
(43) Veröffentlichungstag der Anmeldung: 04.11.2009
(73) Patentinhaber: Fahrzeugwerk Bernard Krone GmbH, 48480 Spelle (DE)
(72) Erfinder: Krone, Bernard, 48480 Spelle (DE); Evers, Heinz, 49733 Haren (DE)
(74) Vertreter: Pott, Ulrich

(56) Entgegenhaltungen:
- DE-A1- 10 145 432
- DE-A1-102006 042 771

## Beschreibung

Die Erfindung bezieht sich auf ein Fahrgestell für Container, Aufbauten und dergleichen Ladungsbehälter mit einem längenveränderbaren Fahrgestellchassis, das über eine Stellmitteleinrichtung verstellbare längenveränderliche Fahrgestelllängstraversen aufweist, über die zumindest ein durch eine Längenveränderung der Fahrgestelllängstraversen in unterschiedlichen Längspositionen überführbarer, quer zur Fahrgestellrichtung ausgerichteter Fahrgestellholm abstützbar ist.

Fahrgestelle der vorgenannten Art zum Transport von Containern unterschiedlicher Größe sind bekannt. Container, die auf solchen Fahrgestellen zu transportieren sind, sind beispielsweise 20 Fuß-Container in üblicher genormter Gestaltung, aber auch 45 Fuß-Container als sogenannte ISO-Container oder sogenannte Geestcontainer. Übliche Fahrgestelle sind auf den Transport bestimmter Containergrößen beschränkt. Dazu sind Feststeller in Gestalt von Sicherungsmitteln vorgesehen, die beispielsweise von unten in vorgesehene Aussparungen des Containers eingreifen, in der Transportstellung des Containers verriegelbar sind und zum Absetzen des Containers entriegelt werden können.

Solch eine Vorrichtung ist aus der DE 101 45 432 bekannt.

Aus dem DE 202 11 194 ist ein Fahrgestell für Container, Aufbauten und Ladungsbehälter bekannt, bei dem in einem vorderen Auflieger angebrachte Containerverriegelungen jeweils um eine Achse aus der Eingangslage mit Standardcontainern in eine Nichtarbeitslage außerhalb des Transportbereiches von Containern zu verschwenken sind, wozu diese um eine fahrtrichtungsparallele, horizontale Achse in eine nach oben verschwenkte Nichtgebrauchsstellung zu überführen sind. Zusätzlich sind Feststeller vorgesehen, die verstellbar ausgebildet und derart anzuordnen sind, daß sie in entsprechende Öffnungen der Beschläge von 40 Fuß-Containers und 45 Fuß-Containern zu bringen sind. Um dies durchführen zu können, sind jedoch Werkzeuge einzusetzen, womit ein nicht unerheblicher Arbeitsaufwand einhergeht.

Aus der DE 10 2005 050 928 ist ein Fahrgestell für Container, Aufbauten und dergleichen Ladungsbehälter mit einem längenverstellbaren Fahrgestellchassis bekannt, bei dem ein seitlicher Feststeller als Verschlußhebel ausgebildet und mitsamt seiner Schwenkachse lageverschieblich in die jeweilige Verriegelungsposition zu bringen ist. Um die Längenverstellbarkeit des Fahrgestells ausführen zu können, ist eine Stellmitteleinrichtung vorgesehen, die Hubzylinder für die Verstellung des Fahrgestellchassis aufweist. Dazu sind die Hubzylinder mit teleskopierbaren Teilen von Fahrgestelllängstraversen verbunden, wobei über eine entsprechende Steuerung von der Bedienperson die jeweils einzustellende Fahrgestellchassislänge anzufahren ist. Dies ist zeitaufwändig und erfordert in der Praxis zeitintensive Nachjustierarbeiten.

Es ist Aufgabe der vorliegenden Erfindung, ein Fahrgestell der eingangs genannten Art dahingehend weiterzubilden, daß mit geringem Bedienaufwand für die Bedienperson vorgebbare Fahrgestellchassislängen einstellbar sind.

Zur Lösung dieser Aufgabe zeichnet sich das Fahrgestell der eingangs genannten Art dadurch aus, daß die Stellmitteleinrichtung über ein Hubelement gekoppelte Tandemhubzylinder umfaßt, über die der in unterschiedliche Längspositionen überführbare, quer zur Fahrgestelllängsachse ausgerichtete Fahrgestellholm bewegbar ist, wobei einer der Hubzylinder der Tandemzylinderanordnung ortsfest an dem Fahrgestellchassis und der andere Tandemhubzylinder relativ gegenüber dem ortsfest angeordneten Tandemhubzylinder weg von diesem oder zu diesem hin bewegbar an dem quer zur Fahrgestelllängsachse ausgerichteten Fahrgestellholm abstützbar ist.

Damit ist ein Fahrgestell für Container, Aufbauten und dergleichen Ladungsbehälter zur Verfügung gestellt, bei dem über die Tandemhubzylinder der Stellmitteleinrichtung fest vorgegebene Hubstellungen mit einfachstem Bedienaufwand angefahren werden können, indem für verschiedene Längsstellungen des Fahrgestellhoms und damit für unterschiedliche Längen Fahrgestelllängstraversen anwählbar über einfache Schaltelemente Positionen vorwählbar sind, die eine definierte Hublänge der beiden gekoppelten Zylinder sicherstellen können.

Bevorzugtermaßen sind dies vier Hubstellungen, indem für die voll ausgefahrene Stellung der Fahrgestelllängstraversenteile und damit für eine maximale Fahrgestellchassislänge beide Hubzylinder voll ausfahren, in einer anderen Stellung nur einer der Hubzylinder voll ausgefahren ist, wohingegen der andere eingefahren ist und in der letzten und damit kürzesten Stellung beide Hubzylinder der Tandemhubzylinderanordnung eingefahren sind. Damit ergeben sich für den einen lageveränderlich zu plazierenden, quer zur Fahrzeuglängseinrichtung vorgesehenen Fahrgestellholm schon vier verschiedene Fahrgestellchassislängen, wobei hierbei vorausgesetzt ist, daß die Hubzylinder der Tandemhubzylinderanordnung unterschiedliche Hublängen realisieren.

Ist auch noch ein rückwärtiger, quer zur Fahrgestelllängsachse vorgesehener Fahrgestellholm ebenfalls relativ zu einem Fahrgestellchassishauptteil translatorisch bewegbar, ist dieser ebenfalls eine Tandemhubzylinderanordnung in analoger Ausbildung zuzuordnen, wobei sich vier weitere Verstellmöglichkeiten ergeben. Diese sind wiederum durch eine einfache Schalteranordnung von der Bedienperson anzufahren und beispielsweise auf Containermaße abgestellt, die üblichen Containermaßen entsprechen. Ein Nachjustieren oder exaktes Anfahren ist damit entbehrlich. Insgesamt ist damit ein Fahrgestell zur Verfügung gestellt, das mit einfachen Bauteilen auskommt und bei dem bei der Bedienung erhebliche Zeitersparnisse zu erzielen sind.

Weitere Ausgestaltungen der Erfindung ergeben sich aus den weiteren Unteransprüchen; der nachfolgenden Beschreibung und der Zeichnung. In der Zeichnung zeigen:
- Fig. 1: in einer schematischen perspektivischen Darstellung ein Ausführungsbei- spiel eines Fahrgestells nach der Erfindung mit zwei Tandemzylinderanord- nungen;
- Fig. 2: den Bereich des Ausführungsbeispiels nach Fig. 1 im Bereich eines vorde- ren quer zur Fahrgestelllängsrichtung ausgerichteten Querholms mit der die- sem zugeordneter Tandemzylinderhubanordnung im eingefahrenen Zustand des Fahrgestellholms bzw. des an diesem befestigten Teils der Fahrgestell- längstraverse, und
- Fig. 3: eine zu Fig. 2 analoge Darstellungen mit ausgefahrenem Fahrgestellholm.

In den Figuren sind grundsätzlich gleichwirkende Teile mit übereinstimmenden Bezugsziffern angegeben.

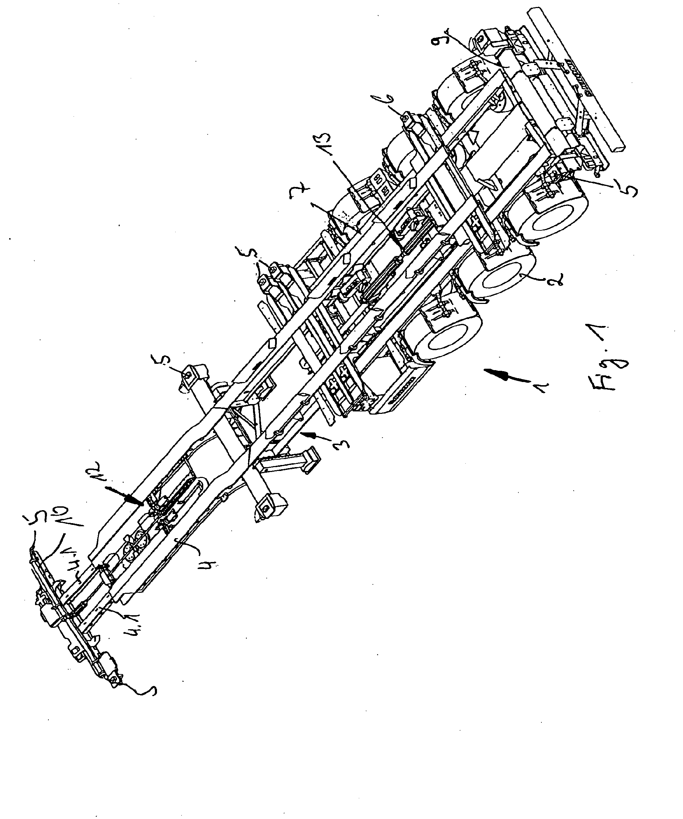

In der Zeichnung ist allgemein mit 1 ein Fahrgestell 1 beziffert. Dieses Fahrgestell 1 ist über Reifen 2 auf dem Erdboden abstützbar und hat ein Fahrgestellchassis 3 mit Fahrgestelllängstraversen 4, das teleskopierbar ausgebildet ist mit Fahrgestelllängstraversenteilen 4.1 und im Bereich eines rückwärtigen, quer zur Fahrgestelllängsausrichtung ausgerichteten Fahrgestellholms 5 in Fig. 1 nicht sichtbaren Fahrgestelllängstraversenteilen 4.2, die in der Ansicht nach Fig. 1 eingefahren sind.

Zusätzlich sind noch Sicherungsmittel 5 vorgesehen und ein Laderahmengestell 7, das relativ gegenüber den Fahrgestelllängstraversen 4 verschieblich ist.

Im vorderen Bereich des Fahrgestells 1 - bezogen auf die Fahrgestellvorwärtsrichtung - ist ein vorderer, quer zur Fahrgestelllängsrichtung ausgerichteter Fahrgestellholm 10 vorgesehen, der an den Fahrgestelllängstraversenteilen 4.1 befestigt ist.

Dieser kann lageverändert werden. Die Lageveränderung ergibt sich durch eine entsprechende translatorische Bewegung der Fahrgestelllängstraversenteilen 4.1 gegenüber den Fahrgestelllängstraversenteilen 4.

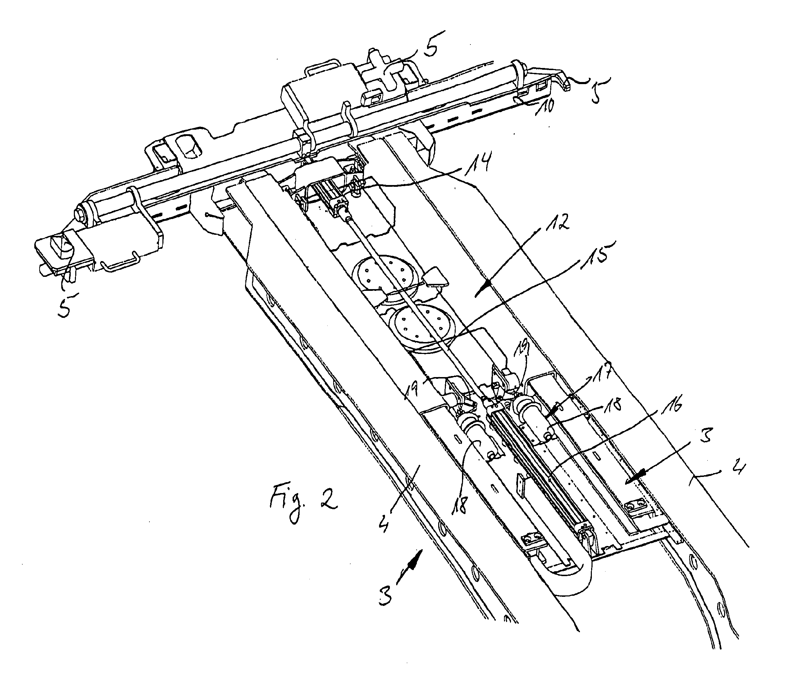

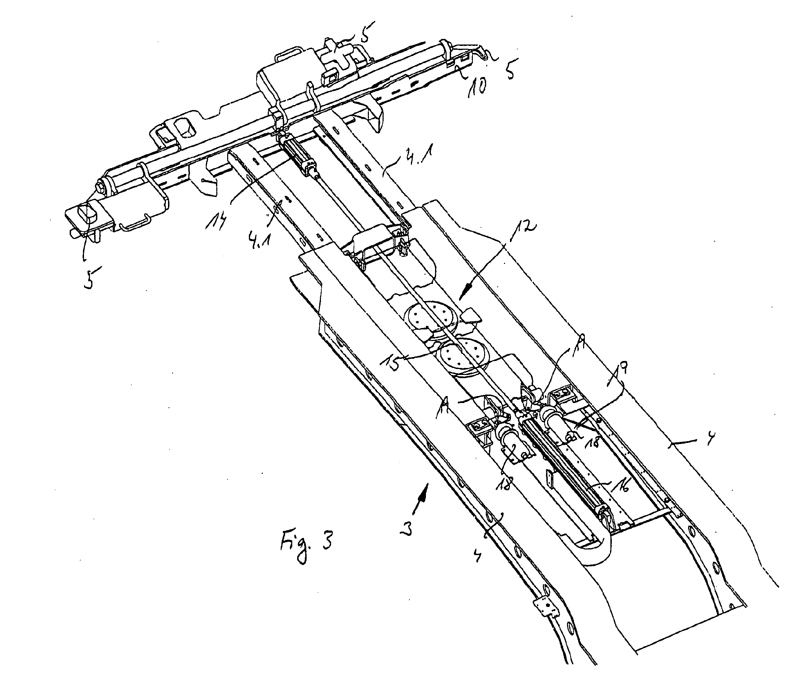

In Fig. 1 befindet sich der Fahrgestellholm 10 in einer ausgefahrenen Lageposition, wohingegen der hintere Fahrgestellholm 9 eingefahren ist. Zum Ein- und Ausfahren der jeweiligen Fahrgestellholme 9 und 10 sind Stelleinrichtungen 12 und 13 in Gestalt einer Tandemhubzylinderanordnung vorgesehen. Wie näher aus den vergrößerten Darstellungen nach den Figuren 2 und 3 hervorgeht, besteht eine solche Stellmitteleinrichtung 12,13 bzw. Tandemhubzylinderanordnung 12, 13 aus einem vorderen, direkt mit den Fahrgestellholm 10 verbundenen Hubzylinder 14, der direkt an dem vorderen Fahrgestellholm 10 befestigt ist und über eine Hubstange 15 mit dem zugeordneten zweiten Hubzylinder 16 der Tandemzylinderanordnung 12 gekoppelt ist. In dem dargestellten Ausführungsbeispiel soll es sich bei den Hubzylindern um Pneumatikzylinder handeln.

Der zweite Hubzylinder 16 ist ortsfest mit dem Fahrgestellchassis 3 verbunden, so daß bei Ausfahrbewegungen der Fahrgestellholm 10 relativ gegenüber dem festen Fahrzeugchassis 3 ausgefahren bzw. eingefahren wird. Dabei sind die Hubzylinder (14,16) derart geschaltet, daß sie jeweils eine volle Ausfahr- bzw. Einfahrbewegung durchführen und einer entsprechenden Schalterbetätigung durch die Bedienperson des Fahrzeugs, so daß aufgrund der unterschiedlichen Hublängen, die die Zylinder 14 und 16 aufweisen, sich insgesamt vier einfach anzufahrende Hubstellungen für die Länge des Fahrzeugchassis 3 bzw. die Lagepositionierung des vorderen Fahrgestellholms 10 ergeben, indem nämlich in einer ersten Stellung beide Hubzylinder 14 und 16 eingefahren sind, wie dies Fig. 2 veranschaulicht. Im voll ausgefahrenen Zustand, wie dies Fig. 3 zeigt, befindet sich der vordere Fahrgestellholm 10 in seiner maximalen Lageposition, womit der vordere Bereich des Fahrgestellchassis 3 voll ausgefahren ist. Dazwischen gibt es noch zwei Stellungen, indem nämlich einmal der vordere Hubzylinder 14 eingefahren ist und der weitere Hubzylinder 16 ausgefahren , und eine weitere Stellung, in der der Zylinder 16 eingefahren und der Hubzylinder 14 ausgefahren ist.

Zur Arretierung der jeweiligen Hubzylinderstellung sind Feststellelemente 17 vorgesehen. Diese bestehen aus zwei z.B. mit Federkraft beaufschlagten Zylindern 18, die mit zwei Schwenkhebeln 19 zusammenwirken, die jeweils abgewinkelt ausgebildet sind, die ihrerseits auf nicht im einzelnen sichtbare Sperrglieder einwirken. Damit kann eine Kraft in Fahrzeuglängsrichtung in eine Kraft quer zur Fahrzeuglängsrichtung umgewandelt werden.

## Patentansprüche

1. Fahrgestell (1) für Container, Aufbauten und dergleichen Ladungsbehälter mit einem längenveränderbaren Fahrgestellchassis (3), das über eine Stellmitteleinrichtung (12) längenveränderbare Fahrgestelllängstraversen (4,4.1) aufweist, über die zumindest ein durch eine Längenveränderung der Fahrgestelllängstraversen (4,4.1) in unterschiedliche Lagepositionen überführbaren, quer zur Fahrgestelllängsachse ausgerichteter Fahrgestellholm (9,10) abstützbar, **dadurch gekennzeichnet, daß** die Stellmitteleinrichtung (12) über ein Hubelement (15) gekoppelte Tandemhubzylinder (14,16) umfaßt, über die der in unterschiedliche Lagepositionen überführbare quer zur Fahrgestelllängsachse ausgerichtete Fahrgestellholm (9,10) bewegbar ist, wobei einer (16) der Hubzylinder (14,16) der Tandemzylinderanordnung ortsfest an dem Fahrgestellchassis (3) abstützbar und der andere Tandemhubzylinder (10) relativ gegenüber dem ortsfest angeordneten Tandemhubzylinder (16) weg von diesem oder zu diesem hin bewegbar an dem Fahrgestellholm (9,10) abstützbar ist.

2. Fahrgestell nach Anspruch 1, **dadurch gekennzeichnet, daß** die Tandemhubzylinder (14,16) als Pneumatikhubzylinder ausgebildet sind.

3. Fahrgestell nach Anspruch 1 oder 2, **dadurch gekennzeichnet, daß** die Tandemhubzylinder (14,16) von einer Steuereinheit in vier Schaltstellungen schaltbar sind, wonach in der ersten Schaltstellung beide Tandemhubzylinder (14,16) eingefahren sind, in einer zweiten Stellung beide Tandemhubzylinder (14,16) ausgefahren sind, in einer dritten Stellung einer der Tandemhubzylinder (14) ausgefahren und der andere Tandemhubzylinder (16) eingefahren und in der vierten Stellung der andere Tandemhubzylinder (16) ausgefahren und der eine Tandemhubzylinder (14) eingefahren ist.

4. Fahrgestellt nach Anspruch 3, **dadurch gekennzeichnet, daß** die beiden zugeordneten Tandemhubzylinder (14,16) unterschiedliche Hublängen aufweisen.

5. Fahrgestell nach einem der Ansprüche 1 bis 4, **dadurch gekennzeichnet, daß** das Fahrgestell (1) zwei Stellmitteleinrichtungen (12) in Gestalt von Tandemhubzylinderanordnungen aufweist und die eine Tandemhubzylinderanordnung einem in Fahrgestellvorwärtsrichtung vorderen Fahrgestellquerholm (10) und die andere Tandemhubzylinderanordnung einem im Fahrgestellvorwärtsrichtung hinterem Fahrgestellquerholm (9) zugeordnet sind.

6. Fahrgestell nach einem der Ansprüche 1 bis 5, **dadurch gekennzeichnet, daß** zumindest einem der Zylinder (14,16) einer Tandemhubzylinderanordnung ein federbeaufschlagtes Feststellelement (17) für einen Tandemhubzylinder zugeordnet ist.

7. Fahrgestell nach Anspruch 6, **dadurch gekennzeichnet, daß** beidseits von einem der Hubzylinder (14,16) ein federbeaufschlagtes Sperrelement vorgesehen ist, das an einem abgewinkelten Betätigungsschenkel (19) angreift, das mit einem Sperrglied zwecks Feststellung und Sicherung der Hubstellung des Tandemhubzylinders (14,16) zusammenwirkt.

## Claims

1. Chassis (1) to carry containers, vehicle bodies and the like load-holding means, having a chassis frame (3) of variable length which has chassis longitudinal girders (4, 4.1) whose length can be varied by a positioning arrangement (12) and which are able to support at least one chassis strut (9, 10), which chassis strut (9, 10) is aligned at right angles to the longitudinal axis of the chassis and is able to be transferred to different positions by a change in the length of the chassis longitudinal girders (4, 4.1), **characterised in that** the positioning arrangement (12) comprises tandem cylinders able to cause reciprocating movement (14, 16) which are coupled by a reciprocating member (15) and by which the chassis strut (9, 10) which is aligned at right angles to the longitudinal axis of the chassis and which is able to be transferred to different positions is able to be moved, one (16) of the cylinders able to cause reciprocating movement (14, 16) which belong to the arrangement of tandem cylinders being able to be supported in a fixed position on the chassis frame (3) and the other tandem cylinder able to cause reciprocating movement (10) being able to be supported on the chassis strut (9, 10) in such a way as to be movable, relative to that tandem cylinder able to cause reciprocating movement (16) which is arranged in a fixed position, away therefrom or theretowards .

2. Chassis according to claim 1, **characterised in that** the tandem cylinders able to cause reciprocating movement (14, 16) are in the form of pneumatic cylinders able to cause reciprocating movement.

3. Chassis according to claim 1 or 2, **characterised in that** the tandem cylinders able to cause reciprocating movement (14, 16) can be switched to four switched positions by a control unit where, in the first switched position, both tandem cylinders able to cause reciprocating movement (14, 16) are withdrawn, in a second position both tandem cylinders able to cause reciprocating movement (14, 16) are extended, in a third position one (14) of the tandem cylinders able to cause reciprocating movement is extended, and in the fourth position the other tandem cylinder able to cause reciprocating movement (16) is extended and the one tandem cylinder able to cause reciprocating movement (14) is withdrawn.

4. Chassis according to claim 3, **characterised in that** the lengths for which the two associated tandem cylinders able to cause reciprocating movement (14, 16) cause reciprocating movement are different.

5. Chassis according to one of claims 1 to 4, **characterised in that** the chassis (1) has two positioning arrangements (12) in the form of arrangements of tandem cylinders able to cause reciprocating movement, and one arrangement of tandem cylinders able to cause reciprocating movement has associated with it a chassis cross strut (10) which at the front in the forward direction of the chassis and the other arrangement of tandem cylinders able to cause reciprocating movement has associated with it a chassis cross strut (9) which is at the rear in the forward direction of the chassis.

6. Chassis according to one of claims 1 to 5, **characterised in that** at least one of the cylinders (14, 16) of an arrangement of tandem cylinders able to cause reciprocating movement has associated with it a spring-loading locking member (17) for a tandem cylinder able to cause reciprocating movement.

7. Chassis according to claim 6, **characterised in that** there is provided on each of the two sides of one of the cylinders able to cause reciprocating movement (14, 16) a spring-loaded locking member which engages with an angled actuating arm (19) which co-operates with a locking element for locking and securing the position of the reciprocating movement caused by the tandem cylinders able to cause reciprocating movement (14, 16).

## Revendications

1. Châssis (1) pour conteneurs, superstructures et supports de charge analogues avec un bâti de châssis (3) de longueur variable, qui présente des traverses longitudinales de châssis (4, 4.1) de longueur variable par le biais d'un dispositif de moyen de réglage (12), par le biais desquelles traverses au moins une poutre de châssis (9, 10) orientée transversalement à l'axe longitudinal du châssis, pouvant être amenée dans différentes positions par une modification de la longueur des traverses longitudinales de châssis (4, 4.1) peut être supportée, **caractérisé en ce que** le dispositif de moyen de réglage (12) comporte des vérins de levage tandem (14, 16) couplés par le biais d'un élément de levage (15), par le biais desquels vérins la poutre de châssis (9, 10) orientée transversalement à l'axe longitudinal du châssis pouvant être amenée dans différentes positions peut être déplacée, l'un (16) des vérins de levage (14, 16) de l'agencement de vérins tandem pouvant être supporté de manière fixe sur le bâti de châssis (3) et l'autre vérin de levage tandem (10) pouvant être supporté sur la poutre de châssis (9, 10) en s'éloignant ou en s'approchant de manière relative par rapport au vérin de levage tandem (16) disposé de manière fixe.

2. Châssis selon la revendication 1, **caractérisé en ce que** les vérins de levage tandem (14, 16) sont réalisés sous forme de vérins de levage pneumatiques.

3. Châssis selon la revendication 1 ou 2, **caractérisé en ce que** les vérins de levage tandem (14, 16) peuvent être commutés par une unité de commande dans quatre positions de commutation, selon lesquelles dans la première position de commutation, les deux vérins de levage tandem (14, 16) sont rentrés, dans une deuxième position, les deux vérins de levage tandem (14, 16) sont sortis, dans une troisième position, l'un des vérins de levage tandem (14) est sorti et l'autre vérin de levage tandem (16) est rentré et dans la quatrième position, l'autre vérin de levage tandem (16) est sorti et le vérin de levage tandem (14) est rentré.

4. Châssis selon la revendication 3, **caractérisé en ce que** les deux vérins de levage tandem (14, 16) affectés présentent différentes longueurs de levage.

5. Châssis selon l'une quelconque des revendications 1 à 4, **caractérisé en ce que** le châssis (1) présente deux dispositifs de moyen de réglage (12) sous la forme d'agencements de vérins tandem et l'un des agencements de vérins tandem est affecté à une poutre transversale de châssis avant (10) en direction de l'avant du châssis et l'autre agencement de vérins tandem est affecté à une poutre transversale de châssis arrière (9) en direction de l'avant du châssis.

6. Châssis selon l'une quelconque des revendications 1 à 5, **caractérisé en ce qu'**un élément d'immobilisation (17) sollicité par ressort pour un vérin de levage tandem est affecté à au moins un des vérins (14, 16) d'un agencement de vérins tandem.

7. Châssis selon la revendication 6, **caractérisé en ce qu'**un élément de blocage sollicité par ressort, qui s'applique au niveau d'une jambe d'actionnement (19) coudée qui coopère avec un organe de blocage en vue de bloquer et de maintenir la position de levage du vérin de levage tandem (14, 16), est prévu des deux côtés d'un des vérins de levage (14, 16).
